(19) Europäisches Patentamt
European Patent Office
Office européen des brevets

(11) Publication number: 0 167 328
A2

(12) EUROPEAN PATENT APPLICATION

(21) Application number: 85304418.8

(22) Date of filing: 20.06.85

(51) Int. Cl.⁴: C 09 K 19/20

(30) Priority: 03.07.84 JP 137491/84

(43) Date of publication of application: 08.01.86 Bulletin 86/2

(84) Designated Contracting States: CH DE GB LI

(71) Applicant: SEIKO INSTRUMENTS & ELECTRONICS LTD.
31-1, Kameido 6-chome
Koto-ku Tokyo(JP)

(71) Applicant: TEIKOKU CHEMICAL INDUSTRY CO., LTD.
1-18, 1-chome Kitahorie
Nishi-ku Osaka(JP)

(72) Inventor: Taguchi, Masaaki
SEIKO INSTRUMENTS & ELECTR. LTD 6-31-1, Kameido
Koto-ku Tokyo(JP)

(72) Inventor: Suenaga, Hitoshi
TEIKOKU CHEMICAL INDUSTRY CO, LTD. 5-41, Senzo
Itami-shi Hyogo(JP)

(74) Representative: Caro, William Egerton et al,
J. MILLER & CO. Lincoln House 296-302 High Holborn
London WC1V 7JH(GB)

(54) Liquid crystal compound.

(57) A liquid crystal compound is represented by the following general formula:

R*O–A–R or R*COO–A–R

wherein R* is an alkyl group having an asymmetric carbon atom, R is a linear alkyl group and A is 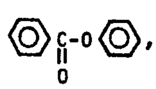,

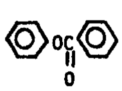 or 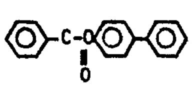.

This invention relates to liquid crystal compounds particularly valuable although not exclusively, as electro-optical elements utilizing response of ferroelectric smectic liquid crystal compounds to electric fields.

Liquid crystal compounds have been utilised as electro-optical elements in various devices such as, for example, watches and electronic table calculators. Liquid crystal compounds currently in use are mainly nematic liquid crystal compounds or cholesteric liquid crystal compounds and, because of their dielectric anisotropy, the long molecular axis is aligned in a given direction by an applied electric field. However, in the case of a display device having many image elements, the response characteristics of such conventional liquid crystal elements are insufficient and, since no sufficient driving margin can be maintained, the contrast and viewing angle characteristics are inadequate. Accordingly, there has been much research into and development of MOS display panels and TFT display panels in which a switching element is formed for each image element.

A liquid crystal element has been developed based on a new display principle using the smectic phase, in which the above-mentioned defects of conventional liquid crystal compounds are overcome. This liquid crystal element will now be briefly described.

Fig. 1 is a diagram illustrating the smectic C* or H phase of a liquid crystal compound. The liquid crystal compound comprises respective molecular layers 1, the average direction of the long axis of thé molecules in these layers being inclined by an angle $\psi_0$ relative to a direction normal to the layers. In the thesis entitled "Ferroelectric Liquid Crystals" in Le Journal

de Physique, Vol. 36 (March 1975, pages L-69 to L-71), Meyer et al. teach that a smectic C* or H liquid crystal compound composed of optically active molecules generally has an electric dipole moment $\vec{P}$ and is ferroelectric. This dipole moment $\vec{P}$ is perpendicular to an inclination direction $\hat{n}$ of the molecules and is parallel to the layer face of the smectic phase. Although the same is applicable also to the smectic H phase, the visciousness to rotation about the axis normal to the molecular layers is large in H phase. The presence of an electric dipole moment in the chiral smectic phase gives rise to a much stronger coupling force to the electric field than dielectric anisotropy. Further, this coupling force has a polar characteristic in the sense that the preferred direction of the dipole moment $\vec{P}$ is a direction parallel to the electric field $\vec{E}$. Accordingly, if the direction of the applied electric field is inverted, the direction of the dipole moment $\vec{P}$ is inverted. Namely, by inversion of the electric field (the angle $2\psi_0$ will be referred to as the "cone angle" hereinafter), shown in Fig. 2 is such that the direction of the dipole moment $\vec{P}$ can be controlled by the movement of the molecules along the cone. Accordingly, the liquid crystal compound can be utilised in an electro-optical element by detecting change of the molecules in the direction of the average long axis by means of two polarising plates.

In an electro-optical element utilising the response of the smectic C* or H phase of a liquid crystal compound to an electric field, the coupling force between the spontaneous polarisation and the electric field is of the order of $10^3$ to $10^4$ times larger than the coupling force due to dielectric anisotropy. Accordingly, the response speed of this electro-optical element is higher than that of a TN type liquid crystal element and, if appropriate orientation control is selected, a memory characteristic can be obtained. Therefore, it is expected

that this electro-optical element can be applied to high-speed optical shutters or display devices for displaying a large quantity of information.

Various chiral smectic liquid crystal compounds having this ferroelectric characteristic have heretofore been synthesised and investigated. The ferroelectric liquid crystal compound first synthesised was p-decyloxy-benzilidene-p'-amino.2-methylbutyl cynnamate generally called "DOBAMBC". Ferroelectric liquid crystal compounds represented by the following structural formula have been synthesised and investigated:

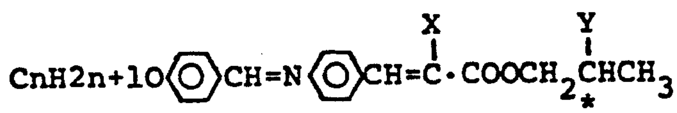

where X is H, Cℓ or CN, Y is Cℓ or $C_2H_5$, and the asterisk indicates an asymmetric carbon atom.

Since liquid crystal compounds of this type show a chiral smectic phase at a relatively high temperature exceeding room temperature, they have the disadvantage that they cannot be used at room temperature. Moreover, since the liquid crystal compounds are of the Schiff base type, they are readily decomposed in the presence of water and their stability is poor.

As an improved liquid crystal compound developed from the above, B.I. Ostrovskii et al. [Ferroelectrics, 24, 309 (1980)] and A. Hallsby et al. [Mol. Cryst. Liq. Cryst., Letter 82, 61 (1982)] proposed a chiral smectic liquid crystal compound of the Schiff base type having a hydroxyl group introduced into one benzene ring and a hydrogen bond in the molecule, as represented by the following general formula:

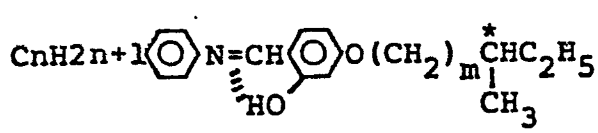

This compound has attracted attention as a compound showing the smectic C* phase over a broad temperature range including

room temperature. Since this compound contains a hydrogen bond in the molecule, it is scarcely decomposed in the presence of water and has an excellent stability compared to liquid crystal compounds of the Schiff base type. However, this compound is not practical because non-crystalisation at temperatures lower than $0^{o}C$ is required in practice.

An azoxy type liquid crystal material was reported by P. Keller et al. [Ann. Phys., 139 (1978)]. However, since its applicable temperature range is insufficient and this liquid crystal material is a dense yellow compound, it cannot be put into practical use.

Ester type liquid crystal compounds are noted for their stability among TN type liquid crystal materials. The above B.I. Ostrovskii et al. reference reported that a compound represented by the following general formula:

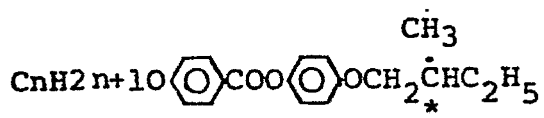

(n=9, 10)

shows a chiral smectic liquid crystal phase at temperatures relatively close to room temperature. Moreover, G.W. Gray et al. [Mol. Cryst. Liq. Cryst., <u>37</u>, 189 (1976) and <u>48</u>, 37 (1978)] reported a biphenyl ester type material showing a chiral smectic liquid crystal phase at relatively high temperature.

It will be appreciated from the foregoing discussion that a liquid crystal compound that can be put into practical use and that shows a chiral smectic phase over a broad temperature range including room temperature has not yet been developed. Furthermore, known liquid crystal compounds exhibiting a chiral smectic phase over a relatively broad temperature range have poor stability.

The present invention seeks to provide liquid crystal compounds which are valuable in liquid crystal compositions showing a chiral smectic phase over a broad temperature range including room temperature and having good stability.

According to a first aspect of the present invention there is provided a liquid crystal compound represented by the following general formula:

R*O-A-R or R*COO-A-R

wherein R* is an alkyl group having an asymmetric carbon atom, R is a linear alkyl group and A is 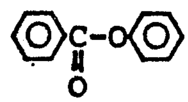,

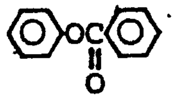 or 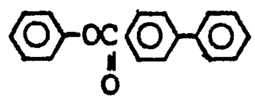.

According to a second aspect of the present invention there is provided a liquid crystal composition including one or more liquid crystal compounds as recited in the preceding paragraph.

The invention is illustrated, merely by way of example, in the accompanying drawings, in which:-

Figure 1 is a model illustrating the smectic C* phase or H phase of a liquid crystal compound;

Figure 2 is a model illustrating the movement of liquid crystal molecules of the chiral smectic phase of a liquid crystal compound under the action of an electric field;

Figure 3 is a graph showing the temperature dependence of response speed; and

Figures 4 to 7 are phase diagrams of admixtures of two liquid crystal compounds according to the present invention.

A novel optically active liquid crystal compound represented by the following general formula:

R*-O-A-R or R*COO-A-R (A)

wherein R* is an alkyl group having an asymmetric carbon atom, R is a linear alkyl group and 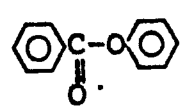.

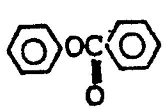 or 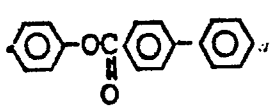

has been synthesised.

Most of the liquid crystal compounds represented by the above general formula (A) show the Sc* phase at temperatures close to room temperature, and it has been found that when these liquid crystal compounds are admixed, there is produced liquid crystal compositions showing the Sc* phase even at low temperatures. It has also been found that most of the liquid crystal compounds represented by the general formula (A) but having a short side chain do not show the Sc* phase but show only a cholesteric phase, but when these compounds are blended with other liquid crystal compounds showing an Sc* phase, there is obtained liquid crystal compositions showing an Sc* phase even at low temperatures.

Moreover, from the results of experiment, it has been found that in liquid crystal compounds represented by the general formula (A) but with -O- or -COO- introduced into both side chains, the mutual action in the lateral direction of the molecule is strengthened, since the -O- or -COO- group has a strong dipole moment in the direction of the short axis of the molecule. Hence the liquid crystal compounds have high smectic characteristics and show the Sc* phase over a broad temperature range higher than room temperature. However, movement along the cone scarcely takes place because of the strong mutual action in the lateral direction and the response characteristics are poor. In contrast, in the case of liquid crystal compounds having a dipole moment in the lateral direction only in one side chain, as in liquid crystal compounds according to the present invention, the mutual action in the lateral direction of the molecule is weakened and the smectic characteristics are reduced. Accordingly, most of these liquid crystal compounds show an Sc* phase at low temperatures close to room temperature

and they have a considerably higher response speed than liquid crystal compounds having -O- or -COO- groups introduced into both the side chains.

It has also been found that a liquid crystal compound having a molecular skeleton including three biphenyl ester rings shows an Sc* phase at temperatures higher than in the case of a liquid crystal compound having two rings and hence, such a liquid crystal compound can be used as a component of a liquid crystal composition for increasing the upper limit temperature of the Sc* phase.

The present invention will now be described in detail with reference to the following examples.

<u>Example 1</u>

A process for the synthesis of optically active 4"-octylphenyl 4'- (6-methyloctyloxy) benzoate was as follows:

First Stage:

A 50-mℓ three-neck flask was charged with 2.01 g of sodium hydroxide, 10 mℓ of water and 20 mℓ of ethanol, and 3.16 g of 4-n-hydroxybenzoic acid was dissolved therein. 4.75 g of optically active 1-bromo-6-methyloctane synthesized from commercially available amyl alcohol was added to the mixture, and reacted for 19 hours under heat and reflux. After completion of the reaction, ether washing was conducted, and the aqueous layer was recovered by filtration and acidified. The precipitated crystals were recovered by filtration and purified to obtain 4.75 g of 4-(6-methyloectyloxy)-benzoic acid.

| $\nu^{nujo\ell}_{max}(cm^{-1})$ | $\delta^{CDC\ell_3}_{TMS}(ppm)$ |
|---|---|
| 2500∿2200 | 11.54, broad s, 1H |
| 1675 | 8.08, d J=9Hz, 2H |
| 1605 | 6.94, d J=9Hz, 2H |
| 1580 | 3.99, t J=6Hz, 2H |
| 1250 | |

Second Stage:

To 2.2 g of optically active 4-(6-methyloctyloxy) benzoic acid was added 11 mℓ of thionyl chloride, and reacted for 4 hours under heat and reflux. Excess thionyl chloride was removed by distillation under reduced pressure to recover an oily acid chloride.

$$(\nu_{max}^{film}\ 1765,\ 1740\ cm^{-1})$$

Whilst cooling with ice, 1.72 g of 4-n-octylphenol and 10 mℓ of dry pyridine were added to the oily acid chloride, and the reaction was carried out overnight while the temperature was gradually elevated to room temperature. After the reaction was complete, the precipitate was recovered by filtration and extracted with ether. The ether layer was washed with water, 2N HCℓ and 5% NaOH in sequence and then with water and a saturated aqueous solution of sodium chloride until the organic layer became neutral. The organic layer was dried and the ether removed by distillation under reduced pressure to obtain a crystalline compound. The above procedures were repeated to effect purification and obtain 3.21 g of the intended liquid crystal compound.

| | | | |
|---|---|---|---|
| $\nu_{max}^{nujo\ell}$ $(cm^{-1})$ | 1740 | $\delta_{TMS\,(ppm)}^{CDC\ell_3}$ | 6.84∿8.19, m, 8H, Aromatic H |
| | 1610 | | 3.98, tJ=6Hz, 2H, $-CH_2-O-$ |
| | 1580 | | 2.59, t 2H, $-CH_2-Ar$ |

This liquid crystal compound showed the following phase transition:

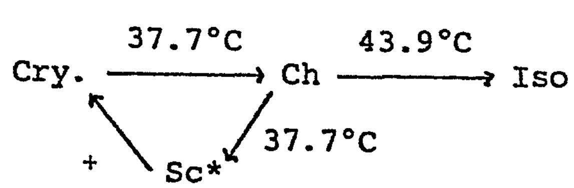

+ indicates super-cooling.

This liquid crystal compound had a monotropic smectic liquid crystal phase but it showed a Sc* phase for a long time at room temperature, that is, in a super-cooled state.

The liquid crystal compound was inserted between base plates monoaxially oriented by PVA rubbing, and the thickness of the liquid crystal layer was arranged to be 3μm and characteristics were determined under crossed nicols by applying a voltage of ±10 V. The measurement temperature was 30°C.

Cone angle: 44°

Contrast (Ton/Toff): 14.0

Response speed: 1.0 msec

Example 2

A process for the synthesis of optically active 4'-(6'-methyloctyloxy)phenyl 4-n-octylbenzoate was as follows.

First Stage:

A 25 mℓ-flask was charged with 0.637 g of hydroquinone, 1 g of optically active 1-bromo-6-methyloctane, 0.667 g of anhydrous potassium carbonate and 4 mℓ of N,N-dimethylformamide, and the reaction was carried out at 90°C for 9.5 hours. After the reaction was complete, insoluble substances were recovered by filtration and extracted with ether. The ether layer was washed with water and a saturated aqueous solution of sodium chloride and dried, and the ether was removed by distillation under reduced pressure. The crude productd obtained was purified using silica gel chromatography to obtain 0.32 g of optically active 4-(6'-methyloctyloxy) phenol.

0167328

$\nu_{max(cm^{-1})}^{film}$ 3350

1520

1110

$\delta_{TMS(ppm)}^{CDCl_3}$ 6.73, s, 4H Aromatic H

5.42, broad s, 1H -OH

3.87, t J=6Hz, 2H $-CH_2-O-$

Second Stage:

To 2.97 g of n-octyl benzoate was added 15 mℓ of thionyl chloride, and the reaction was carried out for 4 hours under reflux. Excess thionyl chloride was removed by distillation under reduced pressure to obtain an oily acid chloride.

($\nu_{max}^{film}$ 1775, 1740, 1602 $cm^{-1}$)

Third Stage:

Whilst cooling with ice, 3 g of 4-(6'-methyloctyl)-phenol obtained in the first stage and 10 mℓ of dry pyridine were added to the above acid chloride, and the reaction was conducted overnight while the temperature was gradually elevated to room temperature. After completion of the reaction, the precipitate was recovered by filtration and extracted with ether. The ether layer was washed with water, 2N HCℓ and 5% NaOH in sequence, and then with water and a saturated aqueous solution of sodium chloride. The organic layer was dried and the ether removed by distillation under reduced pressure. The residue obtained was repeatedly refined to obtain 4.48 g of the intended liquid crystal compound.

| $\nu_{max}^{nujol}(cm^{-1})$ | $\delta_{TMS}^{CDCl_3}(ppm)$ | | |
|---|---|---|---|
| 1742 | 6.85~8.22, m, | 8H, | Aromatic H |
| 1615 | 3.94, t J=6Hz, | 2H, | $-CH_2-O-$ |
| 1600 | 2.70, t, | 2H, | $-CH_2-Ar$ |

This liquid crystal compound showed the following phase transition:

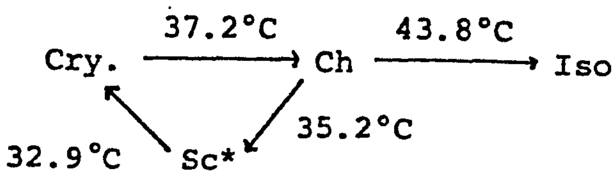


This liquid crystal compound was a monotropic smectic liquid crystal compound.

The liquid crystal compound was inserted between substrates monoaxially oriented by PVA rubbing, and the thickness of the liquid crystal layer was arranged to be 3 μm and the characteristics were determined under crossed nicols by applying a voltage of ±10 V. The measurement temperature was 34°C.

Cone angle: 40°C

Contrast (Ton/Toff): 9.5

Response speed: 1.7 msec

Example 3

A process for the synthesis of optically active 4'-n-octylphenyl 4-(6-methyloctylcarboxy)-benzoate was as follows.

First Stage:

Synthesis of 4'-n-octylphenyl 4-benzyloxybenzoate

A 100-mℓ flask was charged with 8.2 g of 4-benzyloxybenzoic acid and 5o mℓ of thionyl chloride, and the reaction was carried out under reflux for 2.5 hours. Excess thionyl chloride was removed by distillation under reduced pressure to obtain crude crystals. Recrystallization gave 7.9 g of an acid chloride.

($\nu_{max}^{nujol}$ 1770, 1600 $cm^{-1}$) m.p. 106∿108.2°C

To a mixture of 35 mℓ of dry pyridine and 5.01 g of 4-n-octylphenol was added 6 g of the acid chloride with cooling using ice. The temperature was gradually elevated to room temperature and reaction was carried out at 50°C for 2 hours. After completion of the reaction, the precipitate was recovered by filtration and extracted with ethyl acetate. The organic layer was washed with water, 2N HCℓ, water, 5% NaOH, water and a saturated aqueous solution of sodium chloride in sequence and dried. The organic solvent was removed by distillation under reduced pressure. The crude product obtained was purified by column chromatography to obtain 8.13 g of the intended ester.

m.p. 119.5∿120.5°C

| | | | | | |
|---|---|---|---|---|---|
| $\nu_{max(cm^{-1})}^{nujol}$ | 1715 | $\delta_{TMS(ppm)}^{CDC\ell_3}$ | 6.97∿8.24, m, | 13H, | Aromatic H |
| | 1605 | | 5.11, S, | 2H, | $-O-CH_2-$ |
| | | | 2.10, t, | 2H, | $-CH_2-Ar$ |

Second Stage:

Synthesis of 4'-n-octylphenyl 4-hydroxybenzoate

A flask was charged with 7.3 g of 4'-n-octylphenyl 4-benzyloxybenzoate, 0.73 g of 10% Pd/C and 250 mℓ of ethyl acetate. The mixture was stirred with an oil bath temperature of 45°C until the mixture reacted with a theoretical amount of hydrogen. After completion of the reaction, the crystals were removed by filtration and the organic solvent was removed by distillation. The crude crystals obtained were recrystallized to obtain 5.43 g of 4'n-octylphenyl 4-hydroxybenzoate.

m.p. 129.5∿130.8°C

$\nu_{max(cm^{-1})}^{nujol}$ 3460 $\delta_{TMS(ppm)}^{CDC\ell_3}$ 6.60∿8.01, m, 8H, Aromatic H

3370 2.54, t, 2H, $-CH_2-Ar$

1730

Third Stage:

Synthesis of optical active 4'-n-octylphenyl 4-(6-methyloctylcarboxy)benzoate

To 2 g of optically active 6-methylocatanoic acid was added 15 mℓ of thionyl chloride, and the reaction was carried out under reflux for 2 hours. After completion of the reaction, excess thionyl chloride was removed by distillation under reduced pressure to obtain an oily acid chloride.

($\nu_{max,}^{film}$ 1800, 1480 $cm^{-1}$)

Whilst cooling with ice, 4.23 g of 4'-octylphenyl 4-hydroxybenzoate and 30 mℓ of dry pyridine were added to the acid chloride, and the reaction was carried out overnight while the temperature was gradually elevated to room temperature. After completion of the reaction, the precipitate was recovered by filtration and extracted with ether. The ether layer was washed with water, 2N HCℓ and 5% NaOH in sequence, and then with water and a saturated aqueous solution of sodium chloride until the ether layer became neutral. The ether layer was dried and the ether removed by distillation under reduced pressure. The residue was refined repeatedly to obtain 1.38 g of the intended liquid crystal compound.

$\nu_{max}^{nujol}$ $(cm^{-1})$ 1765

1722

1605

$\delta_{TMS}^{CDCl_3}$ (ppm) 6.99∿8.30, m, 8H, Aromatic H

2.47∿2.77, m, 4H, $-CH_2-\overset{O}{\overset{\|}{C}}$, $-CH_2-Ar$

This liquid crystal compound showed the following phase transition:

$$\text{Cry.} \underset{+}{\overset{33.7°C}{\rightleftarrows}} \text{Sc*} \xrightarrow{35.3°C} \text{Ch} \xrightarrow{39.9°C} \text{Iso}$$

+ indicates super-cooling.

The liquid crystal compound was inserted between substrates monoaxially orientated by PVA rubbing, and the thickness of the liquid crystal layer was adjusted to 3 μm. The characteristics were determined under crossed nicols by applying a voltage of ±10 V. The measurement temperature was 34°C.

Cone angle: 40°

Contrast (Ton/Toff): 10.5

Response speed: 700 μsec

Example 4

A process for the synthesis of optically active 4'-(6"-methyloctyloxy)phenyl 4-n-heptylbiphenyl-4'-carboxylate was as follows:

First Stage:

Synthesis of optically active benzyloxyphenyl 6"-methyloctyl ether.

A 100-mℓ 4-neck flask was charged with 3.74 g of NaH (containing 50% of oil) and 50 mℓ of N,N-dimethylformamide, and a solution of 15.46 g of hydroquinone monobenzyl ether

in 30 mℓ of N, N-dimethylformamide was added under a nitrogen current over a period of 20 minutes in an iced water bath. After 20 minutes, 16 g of optically active 1-bromo-6-methyloctane was added over a period of 45 minutes, and the reaction was carried out at room temperature for 6 hours. The reaction mixture was extracted with ether. The ether layer was washed with water, 5% NaOH, water and a saturated aqueous solution of sodium chloride in sequence was dried, and the organic solvent was removed by distillation under reduced pressure to obtain a crude product. The crude product was purified to obtain 24.37 g of an ether compound.

| $\nu_{max(cm^{-1})}^{film}$ | | $\delta_{TMS(ppm)}^{CDC\ell_3}$ | |
|---|---|---|---|
| | 1590 | | 7.37∿7.67, m, 5H, Aromatic H |
| | 1505 | | 6.87, S, 4H, Aromatic H |
| | 1110 | | 4.99, S, 2H, $-O-\underline{CH_2}-Ar$ |
| | | | 3.87, t J=6Hz, 2H, $-CH_2-\underline{CH_2}-O-$ |

Second Stage:

Synthesis of optically active 4-(6'-methyloctyloxy)-phenol.

A flask was charged with 23.37 g of optically active 4-benzyloxyphenyl 6-methyloctyl ether, 2.33 g of 10% Pd/C and 230 mℓ of ethanol, and the mixture was reacted at room temperature until it had reacted with a theoretical amount of hydrogen. After completion of the reaction, the catalyst was removed by filtration and the organic solvent was distilled under reduced pressure to obtain a crude product. The crude product was refined to obtain 16.91 g of the phenol compound

$\nu_{max(cm^{-1})}^{film}$ 3350

1520

1110

$\delta_{TMS(ppm)}^{CDCl_3}$ 6.73, S, 4H Aromatic H

5.42, broad s, 1H -O$\underline{H}$

3.87, t J=6Hz, 2H -$\underline{CH_2}$-O-

Third Stage:

Synthesis of 4-n-heptylbiphenyl-4'carboxylic acid

A 500-mℓ 4-neck flask was charged with 43.26 g of sodium hydroxide, 120 mℓ of ethanol and 120 mℓ of water, and lo g of 4'-n-heptyl-4-cyanobiphenyl was added at room temperature. The mixture was reacted under heat and reflux for 18 hours. After completion of the reaction, the reaction mixture was thrown into ice water and made acidic using concentrated hydrochloric acid.

The precipitated crystals were recovered by filtration and dried, and the crude crystals were recrystallized to obtain 8.92 g of 4-n-heptylbiphenyl-4'-carboxylic acid.

$\nu_{max(cm^{-1})}^{nujol}$ 2750∿2000

1680

1605

$\delta_{TMS(ppm)}^{DMSO-d_6}$ 7.24∿8.18, m, 8H, Aromatic H

2.62, t, 2H, -$\underline{CH_2}$-Ar

Fourth Stage:

Synthesis of 4"-(6"-methyloctyloxy)phenyl 4-n-heptylbiphenyl-4'-carboxylate

To 3 g of 4-n-heptylbiphenyl-4'-carboxylic acid was added 30 mℓ of thionyl chloride, and reaction was carried out under heat and reflux for 4.5 hours. Excess thionyl chloride was removed by distillation under reduced pressure to obtain an oily acid chloride.

($\nu_{max}^{film}$, 1770, 1740, 1600 $cm^{-1}$)

To this acid chloride was added 2.39 g of 4-(6-methyloctyloxy)phenol and 20 mℓ of dry pyridine with cooling by ice. The temperature was elevated to room temperature and reaction was carried out overnight at 45°C. After completion of the reaction, the precipitate was recovered by filtration and extracted with ether. The organic layer was washed with water, 2N HCℓ and 5% NaOH in sequence and then with water and a saturated aqueous solution of sodium chloride until the organic layer became neutral. The ether layer was dried and the ether removed by distillation under reduced pressure. The crude product obtained was repeatedly refined to obtain 4.07 g of the intended liquid crystal compound.

$\nu_{max(-cm^{-1})}^{nujol}$ 1735

1610

1110

$\delta_{TMS(ppm)}^{CDC\ell_3}$ 6.81∿8.30, m, 12H, Aromatic H

3.92, t J=6Hz, 2H, $-\underline{CH_2}-O-$

2.64, t, 2H, $-\underline{CH_2}-Ar$

This liquid crystal compound showed the following phase transition:

$$\text{Cry} \underset{65°C}{\overset{75.6°C}{\rightleftarrows}} \text{Sc*} \xrightarrow{90.2°C} \text{Ch} \xrightarrow{160°C} \text{Iso}$$

Since this liquid crystal compound (referred to as "LC-4") shows a Sc* phase at temperatures much higher than room temperature, it can be used as a blending material for elevating the upper limit temperature of the Sc* phase of a liquid crystal composition.

In order to check the influence of this liquid crystal compound on the response speed, one part of this liquid crystal compound was blended with one or three parts of a liquid crystal compound MBRA8 represented by the following structural formula:

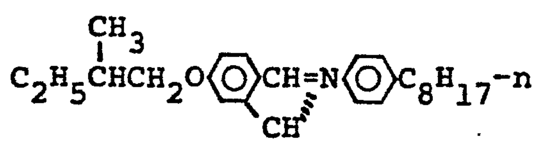

and data of the temperature dependency of the response speed in the resulting liquid crystal composition was collected. For comparison, also data of the liquid crystal compound MBRA8 alone was collected. This data is shown in Figure 3.

The data was collected under cross nicols by inserting the samples between substrates monoaxially orientated by PVA rubbins so that the thickness fo the liqudi crystal layer was 3 μm and by applying a voltage of ±10 V.

It was found that, as shown in Figure 3, the response speed is scarcely reduced even if liquid crystal compound LC-4 is mixed with the liquid crystal compound MBRA8.

Example 5

A phase diagram of an admixture ofd the liquid crystal comound of Example 1 (referred to as "LC-1") and the liquid crystal compound of Example 2 (referred to as "LC-2") is shown in Figure 4.

Since the change of the phase during the elevation of the temperature is shown in Figure 4, each of the liquid crystal compounds LC-1 and LC-2 is indicated in the form not showing the Sc* phase in Figure 1.

As is seen from Figure 4, it is obvious that a liquid crystal compound showing the Sc* phase at temperatures close to room temperature can be so obtained by mixing the liquid crystal compounds LC-1 and LC-2.

Example 6

A phase diagram of an admixture of the liquid crystal compound of Example 1 (referred to as "LC-1") and the liquid crystal compound of Example 3 (referred to as "LC-3") is shown in Figure 5.

As is apparent from Figure 5, it has been confirmed that a liquid crystal composition showing the Sc* phase at temperatures close to room temperature can be obtained by mixture of the liquid crystal compounds LC-1 and LC-3.

Example 7

A phase diagram of an admixture of the liquid crystal compound of Example 1 (referred to as "LC-1") and the liquid crystal compound MBRA8 is shown in Figure 6.

As is apparent from Figure 6, it has been confirmed that a liquid crystal composition showing the Sc* phase even at temperatures lower than room temperature can be obtained by admixture of the liquid crystal compounds LC-1 and MBRA8.

Example 8

A phase diagram of an admixture of the liquid crystal compound of Example 3 (referred to as "LC-3") and the liquid crystal compound MBRA8 is shown in Figure 7.

As is apparent from Figure 7, it has been confirmed that a liquid crystal compound showing the SC* phase at temperatures close to room temperature can be obtained by admixture of liquid crystal compounds LC-3 and MBRA8.

As is seen from the results of the foregoing examples, the novel liquid crystal compounds according to the present invention have good response characteristics and are a blending material effective in obtaining a liquid crystal compound

showing the Sc* phase temperatures close to room temperature or elevating the upper limit of the Sc* phase. Accordingly, these novel liquid crystal compounds are advantageous for obtaining a practical liquid crystal composition showing Sc* phase over a broad temperature range including room temperature.

## CLAIMS

1. A liquid crystal compound represented by the following general formula:

R*O-A-R or R*COO-A-R

wherein R* is an alkyl group having an asymmetric carbon atom , R is a linear alkyl group, and A is 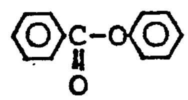, 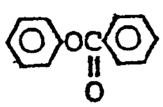 or 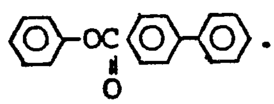.

2. A liquid crystal compound as claimed in claim 1, represented by the following formula:

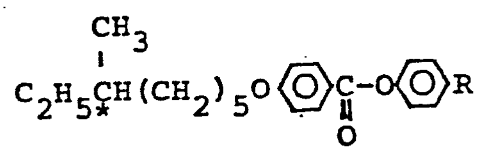

wherein R is a linear alkyl group.

3. A liquid crystal compound as claimed in claim 1, represented by the following formula:

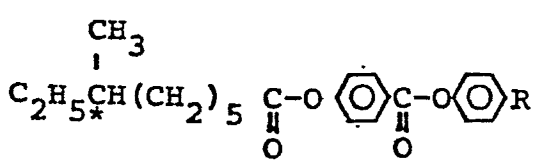

wherein R is a linear alkyl group.

4. A liquid crystal compound as claimed in claim 1, represented by the following formula:

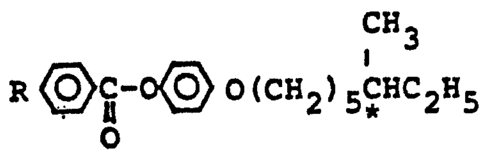

wherein R is a linear alkyl group.

5. A liquid crystal compound as claimed in claim 1, represented by the following formula:

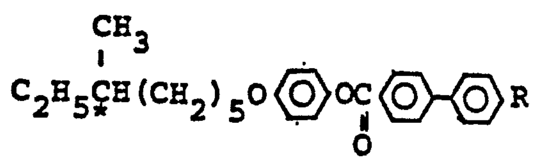

wherein R is a linear alkyl group.

6. A liquid crystal compound as described herein with reference to the Examples.

7. A liquid crystal composition including one or more liquid crystal compounds according to the present invention.

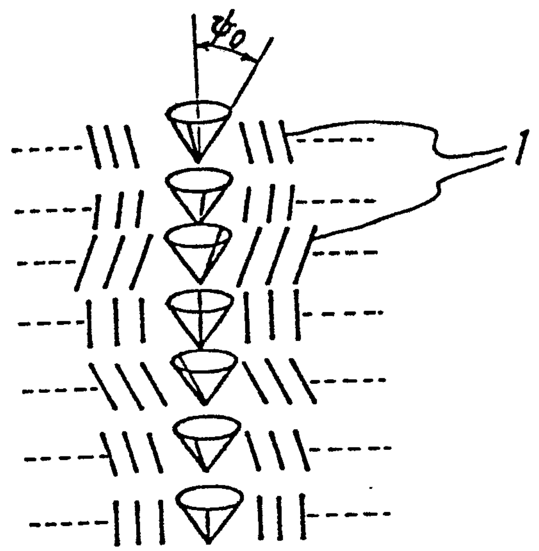


FIG. 1

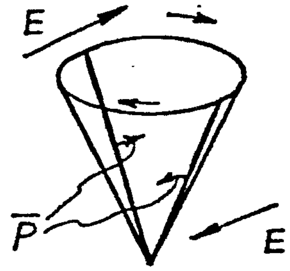


FIG. 2

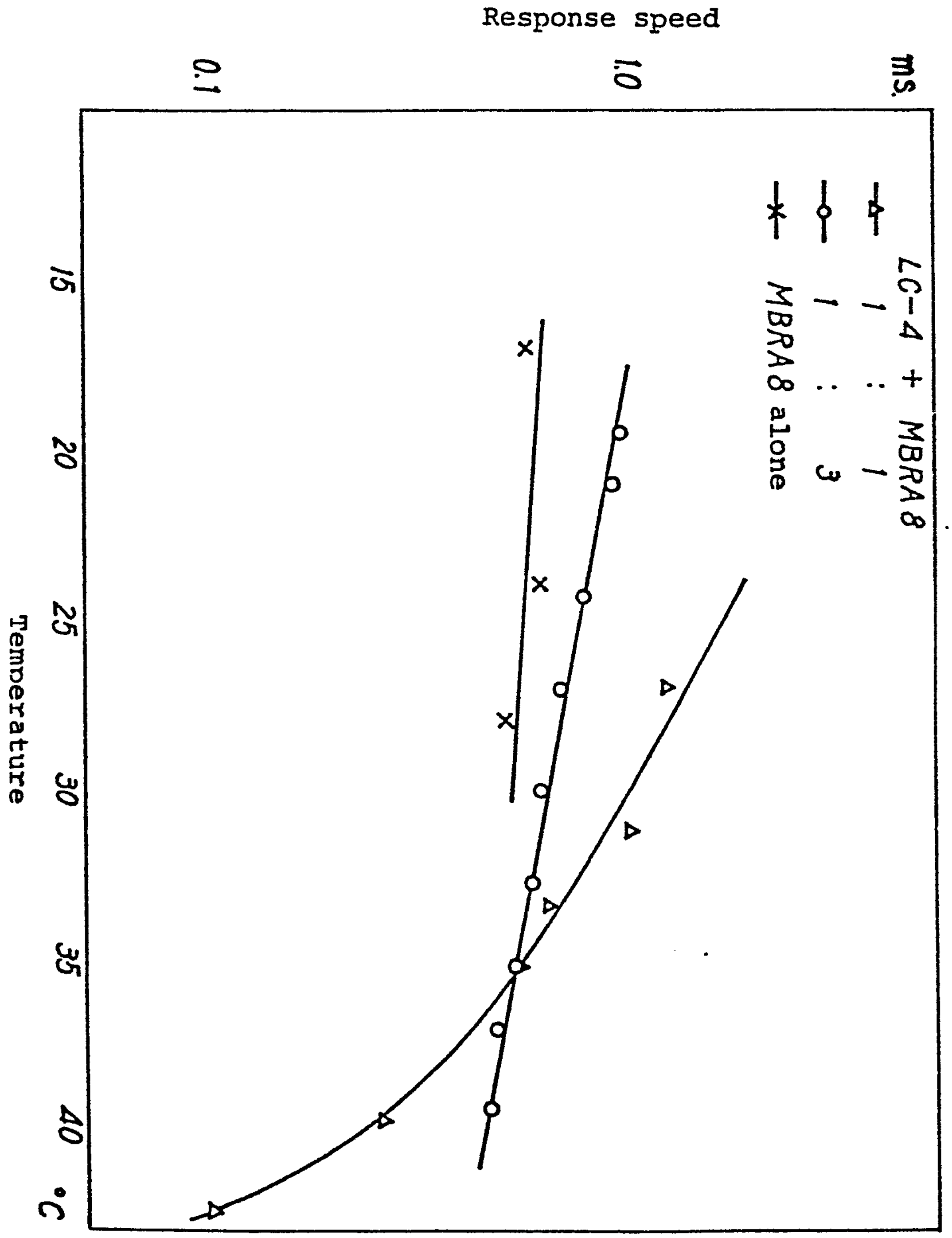

Response speed
ms.
1.0
0.1
LC-4 + MBRA8
1 : 1
1 : 3
MBRA8 alone
15
20
25
30
35
40
°C
Temperature

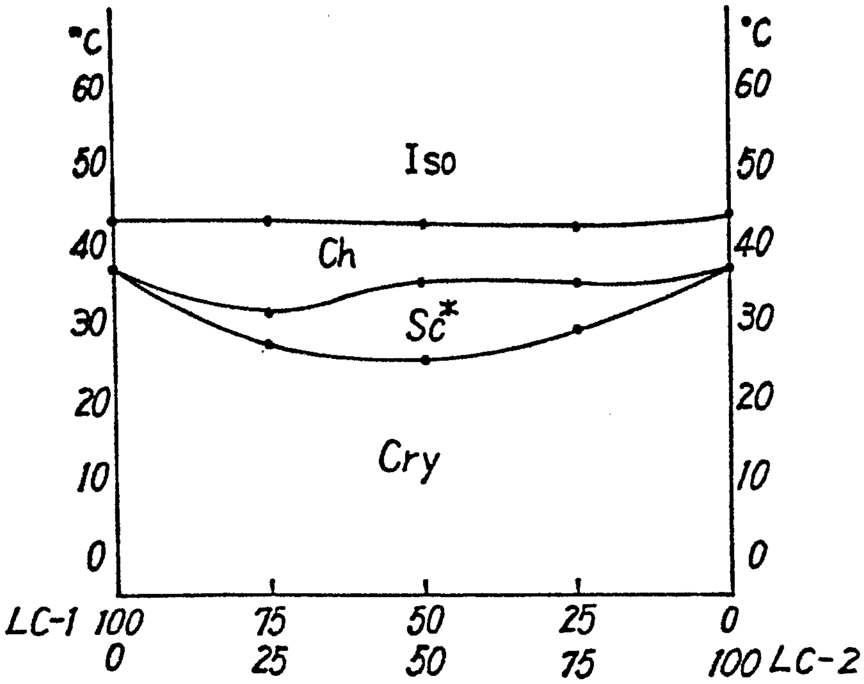
°C
60
50
40
30
20
10
0
°C
60
50
40
30
20
10
0
Iso
Ch
Sc*
Cry
LC-1 100
0
75
25
50
50
25
75
0
100 LC-2

FIG. 4

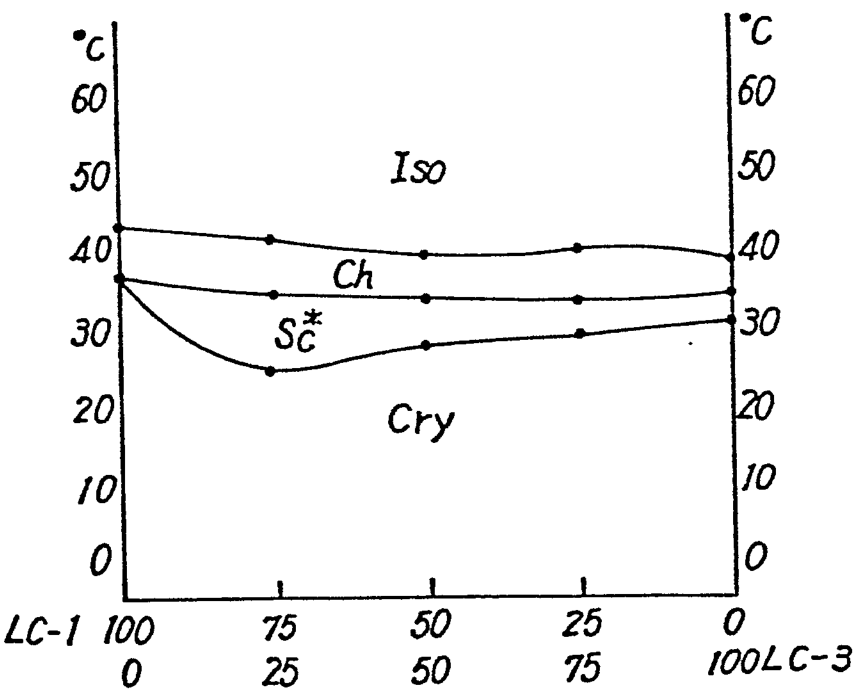
°C
60
50
40
30
20
10
0
°C
60
50
40
30
20
10
0
Iso
Ch
Sc*
Cry
LC-1 100
0
75
25
50
50
25
75
0
100 LC-3

FIG. 5

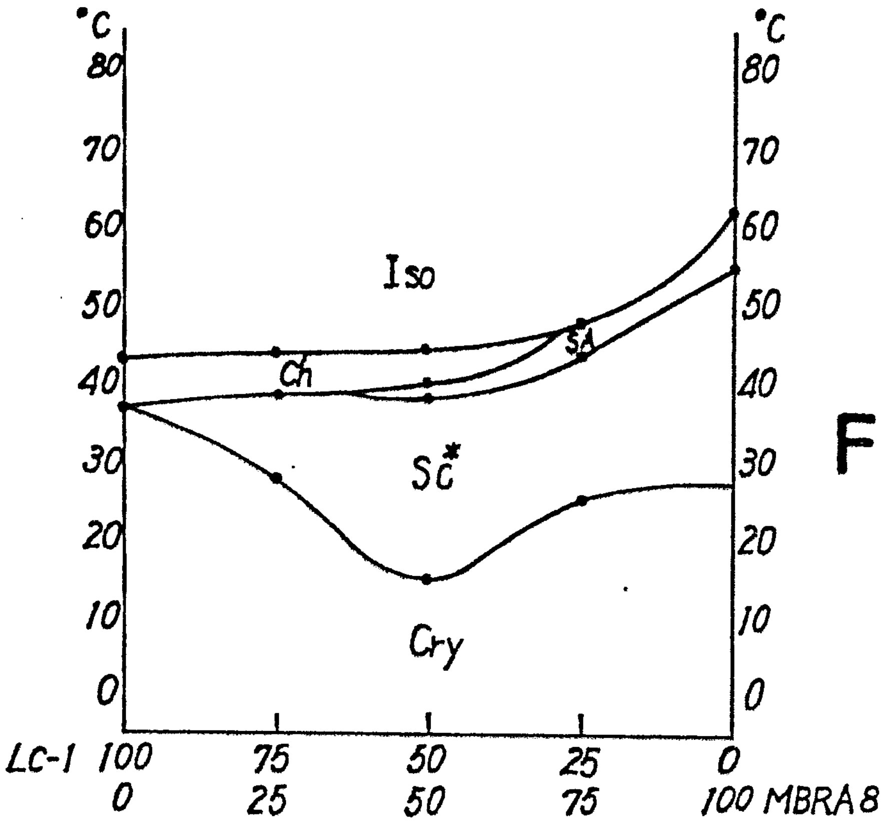
°C
80
70
60
50
40
30
20
10
0
Iso
Ch
SA
Sc*
Cry
LC-1 100 75 50 25 0
0 25 50 75 100 MBRA8

FIG. 6

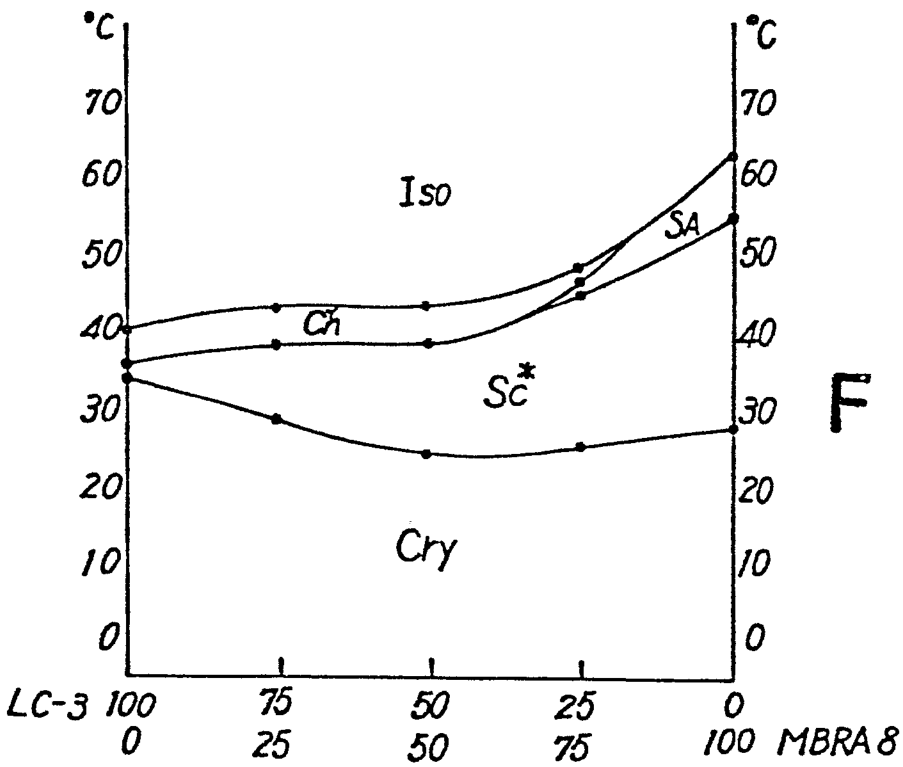
°C
70
60
50
40
30
20
10
0
Iso
Ch
SA
Sc*
Cry
LC-3 100 75 50 25 0
0 25 50 75 100 MBRA8

FIG. 7